# DEMANDE DE BREVET EUROPEEN

(11) **EP 3 489 767 A1**
(43) Date de publication de la demande: **29.05.2019**
(21) Numéro de dépôt: 17203695.6
(22) Date de dépôt: 27.11.2017
(51) Int. Cl.: G04B 31/00

(54) **DISPOSITIF DE CENTRAGE MAGNETIQUE D'UN ARBRE DANS UN MOUVEMENT HORLOGER**

(71) Demandeur: Montres Breguet S.A., 1344 L'Abbaye (CH)
(72) Inventeur: ROCHAT, Jean-Philippe, 1346 Les Bioux (CH); LÉGERET, Benoît, 1024 Ecublens (CH)
(74) Mandataire: ICB SA

(57) **Abrégé**

Le dispositif de centrage magnétique d'un arbre (1) selon un axe déterminé dans un mouvement horloger, comprend au moins un premier palier magnétique (20) muni d'un aimant (6) pour exercer une force d'attraction sur un premier pivot d'extrémité (2) ferromagnétique de l'arbre (1). Le premier palier magnétique comprend une pièce centrale (4) en matériau ferromagnétique doux montée entre l'aimant et le premier pivot d'extrémité de l'arbre. La pièce centrale est placée centralement dans une rondelle (8) en matériau amagnétique pour centrer le flux de champ magnétique généré par l'aimant permanent à travers la pièce centrale pour attirer magnétiquement le premier pivot d'extrémité de l'arbre selon l'axe déterminé. Le diamètre de la pièce centrale peut être identique ou inférieur de 0 à 20 % ou supérieur de 0 à 20 % par rapport au diamètre du premier pivot d'extrémité.

## Description

### DOMAINE DE L'INVENTION

La présente invention concerne un dispositif de centrage magnétique d'un arbre selon un axe déterminé dans un mouvement horloger, le dispositif comprenant au moins un palier magnétique équipé d'un aimant agencé pour exercer une force d'attraction sur un pivot en matériau magnétique de l'arbre.

### ART ANTERIEUR

Il est connu d'utiliser des aimants permanents dans des organes rotatifs de mouvements horlogers, tels que pour maintenir un arbre d'une pièce en rotation selon un axe déterminé. Cela procure l'avantage de générer des forces de maintien importantes et normalement bien localisées tout en limitant les frottements de l'arbre en rotation. Cependant, le champ magnétique peut être décentré d'une valeur trop importante sans moyen de centrage magnétique, ce qui conduit à obtenir un grand nombre de pièces, qui sont refusées après réalisation.

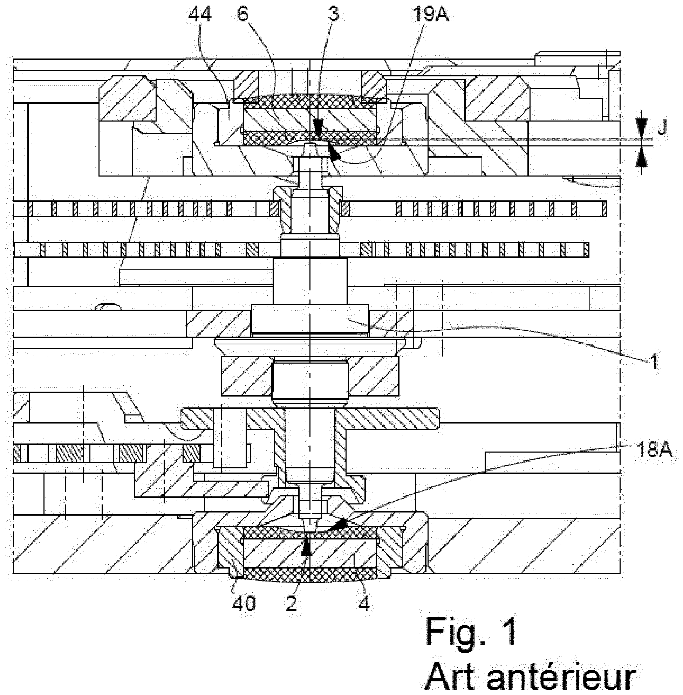

On peut citer la demande de brevet WO 2012/062524 A1, qui décrit, en regard de la figure 13 du document, un dispositif de pivotement d'un arbre avec au moins un palier magnétique représenté à la figure 1 comme art antérieur. Cette figure 1 représente un dispositif de pivotement, qui comprend un arbre 1, dont les extrémités forment deux pivots référencés 2 et 3 respectivement. Les pivots sont réalisés en un matériau magnétique. La figure 1 montre également un premier palier et un second palier agencés pour supporter et guider en rotation les deux pivots 2 et 3. Chacun des deux paliers comporte un chaton, respectivement référencés 40 et 44, un aimant permanent, respectivement référencés 4 et 6, monté dans le chaton et une pierre avec une surface d'appui, respectivement référencées 18A et 19A, insérée entre l'aimant et l'embouchure du chaton. Les aimants 4 et 6 du premier palier et du deuxième palier sont orientés de manière à attirer respectivement le premier pivot et le second pivot, de sorte que l'arbre 1 est maintenu dans l'axe de pivotement, avec un certain jeu, tant radial qu'axial.

La réalisation de mécanismes horlogers fiables fonctionnant selon les principes susmentionnés représente un défi technique important, car les dimensions sont extrêmement réduites. De plus, une grande précision spatiale est demandée pour accomplir avec précision des fonctions chronométriques.

On peut également citer la demande de brevet EP 3 106 934 A1, qui décrit un dispositif de pivotement d'un arbre selon un axe déterminé muni d'au moins un palier magnétique avec un aimant et une structure de centrage du flux magnétique en direction du pivot de l'arbre. Cette structure de centrage comprend une partie périphérique et une partie centrale reliée élastiquement à la partie périphérique par un élément de liaison. La partie centrale est formée d'un matériau à haute perméabilité magnétique et présentant des dimensions inférieures à celles de l'aimant.

Généralement, dans un dispositif de centrage magnétique connu tel que décrit dans les demandes de brevet EP 3 106 934 A1 ou CH 711 220 A2, les différents éléments du dispositif sont contrôlés à l'assemblage et si le champ magnétique généré par au moins un aimant du palier magnétique est décentré d'une valeur trop importante, les pièces réalisées sont refusées. Actuellement avec un dispositif de centrage magnétique connu, il existe un taux de rebut trop important, et l'industrialisation d'un tel dispositif est difficile, ce qui constitue des inconvénients.

### RESUME DE L'INVENTION

Un but de la présente invention est de remédier aux inconvénients de l'art antérieur en fournissant un dispositif de centrage magnétique d'un arbre selon un axe déterminé dans un mouvement horloger dans lequel les lignes de champ magnétique engendrées par au moins un aimant sont bien centrées dans la direction de l'axe de rotation de l'arbre avec une construction simplifiée.

Ainsi, l'invention concerne un dispositif de centrage magnétique d'un arbre selon un axe déterminé dans un mouvement horloger, qui comprend les caractéristiques définies dans la revendication indépendante 1.

Des formes d'exécution particulières du dispositif de centrage magnétique sont définies dans les revendications dépendantes 2 à 17.

Un avantage du dispositif de centrage magnétique réside dans le fait qu'avec la pastille de centrage du champ magnétique généré par l'aimant, cela permet de bien centrer un des pivots d'extrémité de l'arbre selon un axe déterminé. Une augmentation d'intensité du champ magnétique intervient au niveau de la partie centrale, qui est constituée par la pastille réalisée de préférence en matériau ferromagnétique doux, tout en augmentant également le gradient radial du champ magnétique. La force de rappel magnétique, qui agit radialement sur le pivot d'extrémité de l'arbre est ainsi augmenté pour garantir un bon centrage de l'arbre.

Un autre avantage du dispositif de centrage magnétique de l'arbre réside dans le fait qu'un bon centrage du champ magnétique est facilement obtenu par l'intermédiaire de la pastille de centrage. De plus, la structure du palier magnétique simplifiée qui comprend la pastille est facile à réaliser. Le champ magnétique est recentré d'un facteur de 2 à 3. Dans ces conditions, le nombre de pièces refusées après fabrication du dispositif de centrage magnétique est fortement réduit par rapport aux dispositifs de l'art antérieur.

### BREVE DESCRIPTION DES FIGURES

Les buts, avantages et caractéristiques du dispositif de centrage magnétique d'un arbre selon un axe déterminé dans un mouvement horloger apparaîtront mieux dans la description suivante notamment en regard des dessins sur lesquels :
- la figure 1 est une vue en coupe longitudinale d'un dispositif de pivotement magnétique de l'art antérieur;
- la figure 2 est une vue du principe du centrage magnétique d'un arbre selon un axe déterminé d'un mouvement horloger avec le dispositif de centrage magnétique selon l'invention; et
- la figure 3 est une vue partielle en coupe d'une partie du mouvement horloger avec le dispositif de centrage magnétique selon l'invention.

### DESCRIPTION DETAILLEE DE L'INVENTION

Dans la description suivante, toutes les parties d'un dispositif de centrage magnétique d'un arbre selon un axe déterminé dans un mouvement horloger, qui sont bien connues dans ce domaine technique, ne seront décrites que sommairement.

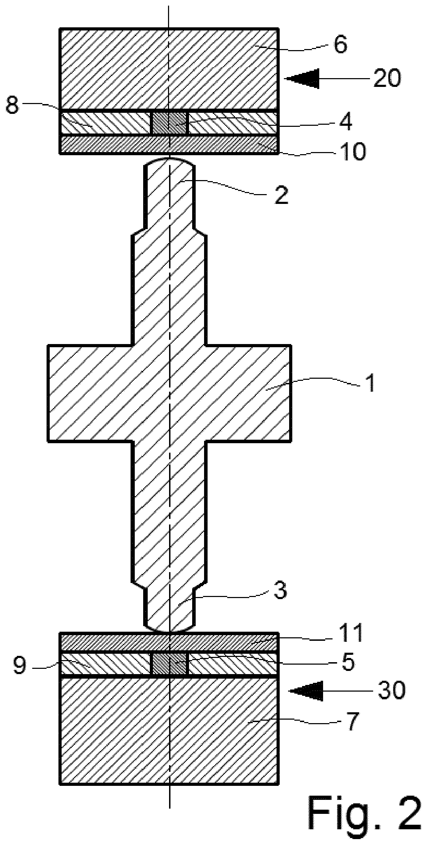

La figure 2 représente de manière simplifiée un dispositif de centrage magnétique d'un arbre 1 selon un axe déterminé dans un mouvement horloger. Le dispositif de centrage magnétique comprend au moins un palier magnétique 20 pour centrer un arbre 1 selon un axe déterminé. Pour ce faire, l'arbre 1 comprend au moins un pivot d'extrémité 2 en matériau ferromagnétique. Comme représenté à la figure 2, le dispositif de centrage magnétique comprend de préférence deux paliers magnétiques 20, 30 disposés de part et d'autre de deux pivots d'extrémité 2 et 3 d'un arbre 1 destiné à tourner lors du fonctionnement du mouvement horloger. Les deux paliers magnétiques 20, 30 ont pour fonction de maintenir par attraction magnétique l'arbre 1 selon un axe déterminé pour sa rotation.

Sur cette figure 2, le premier palier magnétique 20 comprend, successivement depuis le premier pivot d'extrémité 2 de l'arbre 1, au moins une première pierre d'appui contre-pivot 10, qui peut être en rubis, une première pièce centrale 4, qui peut être une première pastille 4 en matériau ferromagnétique doux, disposée centrée sur la première pierre d'appui. La première pastille 4 est par exemple disposée centrée sur la pierre d'appui 10. La première pastille 4 est insérée ou chassée ou collée dans une ouverture centrale dans une première rondelle 8 ou douille en matériau amagnétique, tel que du laiton par exemple. Directement au-dessus de l'ensemble, qui comprend la première rondelle 8 et la première pastille 4 pour le centrage du champ magnétique, il est disposé au moins un premier aimant 6, qui peut être d'un même diamètre que la première rondelle 8. Cet aimant permanent peut être réalisé en néodyme-fer-bore par exemple. Le flux de champ magnétique généré par le premier aimant 6 est recentré pour passer à travers la première pastille 4 afin d'augmenter la force d'attraction radiale du premier pivot 2 ferromagnétique pour centrer l'arbre 1 selon un axe déterminé. Cet axe déterminé est normalement l'axe de rotation de l'arbre 1 lors du fonctionnement du mouvement horloger.

A la figure 2, le dispositif de centrage magnétique comprend de préférence encore un second palier magnétique 30 disposé en regard d'un second pivot d'extrémité 3 de l'arbre 1 opposé au premier pivot d'extrémité 2. Le second palier magnétique 30 comprend, successivement depuis le second pivot d'extrémité 3, au moins une seconde pierre d'appui contre-pivot 11, qui peut être en rubis, une seconde pièce centrale 5, qui peut être une seconde pastille 5 en matériau ferromagnétique doux, sur la seconde pierre d'appui. La seconde pastille 5 est par exemple disposée centrée sur la seconde pierre d'appui 11. La seconde pastille 5 est insérée ou chassée ou collée dans une position centrale dans une seconde rondelle 9 ou douille en matériau amagnétique, tel que du laiton par exemple. Directement au-dessus de l'ensemble, qui comprend la seconde rondelle 9 et la seconde pastille 5 pour le centrage du champ magnétique, il est disposé au moins un second aimant 7, qui peut être d'un même diamètre que la seconde rondelle 9. Le flux de champ magnétique généré par le second aimant 7 est recentré pour passer à travers la seconde pastille 5 afin d'augmenter la force d'attraction radiale du second pivot 3 ferromagnétique pour centrer l'arbre 1 selon un axe déterminé.

L'espace subsistant entre la première pierre d'appui 10 et le premier pivot d'extrémité 2 ou entre la seconde pierre d'appui 11 et le second pivot d'extrémité 3 est inférieur à 0.1 mm et de préférence inférieur à 0.03 mm. Cela dépend de la dimension de l'arbre 1 et des deux pivots d'extrémité 2, 3, qui peuvent être d'un diamètre inférieur à 1 mm et de préférence de l'ordre de 0.15 mm. Ainsi, une force d'attraction magnétique de chaque pivot 2, 3 par les premier et second aimants permanents 6, 7 à travers chaque pastille 4, 5, est suffisante. L'épaisseur de chaque pierre d'appui contre-pivot 10, 11 est inférieure à 1 mm et de préférence de l'ordre de 0.06 mm. Chaque pièce centrale ou pastille 4, 5 en matériau ferromagnétique doux peut être de diamètre extérieur identique au diamètre de chaque pivot d'extrémité 2, 3 ou de diamètre par exemple de 0 à 20 % inférieur.

Cependant il peut aussi être imaginé que chaque pièce centrale ou pastille 4, 5 en matériau ferromagnétique doux peut être de diamètre extérieur identique au diamètre de chaque pivot d'extrémité 2, 3 ou de diamètre par exemple de 0 à 20 % supérieur.

Avec un tel agencement de chaque palier magnétique 20, 30, cela facilite le montage de chaque pièce et permet de mieux recentrer le flux magnétique de chaque aimant pour maintenir les deux pivots d'extrémité 2, 3 de l'arbre 1 selon un axe déterminé. Le recentrage du flux magnétique généré par les aimants 6, 7 est d'un facteur de 2 à 3.

Il est encore à noter que chaque pièce centrale ou pastille 4, 5, ainsi que l'arbre 1, peuvent être formés d'un matériau à haute perméabilité magnétique, tel qu'un matériau ferromagnétique doux. Le matériau ferromagnétique doux peut être choisi parmi le fer, le cobalt, le nickel, le magnésium, le silicium, l'alliage fer-cobalt, l'alliage nickel-cobalt, ou l'alliage fer-nickel. Dans une forme d'exécution, le matériau peut être du nickel-phosphore avec un pourcentage de phosphore inférieur ou égal à 11 %. Selon une autre variante l'élément de centrage de flux magnétique peut être réalisé intégralement en un matériau magnétiquement doux, caractérisé par un champ coercitif H_{c} inférieur à 5 kA/m, de saturation supérieur à 0.5 T et une perméabilité *µ_{R}* maximale égale ou supérieure à 1000. Selon une autre variante, le matériau pourrait aussi être magnétiquement dur.

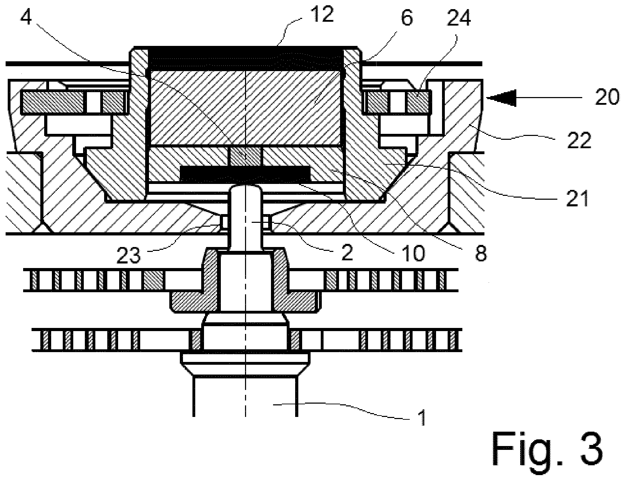

La figure 3 représente une coupe d'une partie du mouvement horloger avec le dispositif de centrage magnétique selon l'invention. On peut observer sur cette figure 3, principalement le premier palier magnétique 20 plus complet, et le premier pivot d'extrémité 2 de l'arbre 1, qui est maintenu magnétiquement selon un axe déterminé par le premier palier magnétique 20.

Le premier palier magnétique 20 comprend un premier support 22, qui comporte une base du côté du premier pivot d'extrémité 2 avec une ouverture 23 de diamètre supérieure au diamètre du premier pivot d'extrémité 2. Le premier palier magnétique 20 est agencé pour supporter et guider en rotation le premier pivot d'extrémité 2. Le premier pivot d'extrémité 2 passe à travers l'ouverture 23 du premier support 22 sans contact direct. Le premier support 22 est prévu encore pour positionner un premier chaton 21. A cet effet, le premier chaton 21 est maintenu dans un logement en forme de cône inversé du premier support 22 par des moyens élastiques 24 disposés dans la partie intérieure haute du premier support 22. Le premier support 22 est une pièce de révolution comprenant un rebord circulaire.

Le premier palier magnétique 20 comprend encore dans le premier chaton 21 depuis le haut successivement, une première pierre d'appui supérieure 12, un premier aimant permanent 6, une première pièce centrale ou pastille 4 de centrage du flux de champ magnétique généré par le premier aimant 6, ladite première pastille 4 étant chassée dans une première rondelle ou douille 8 amagnétique, et une première pierre d'appui contre-pivot 10. Le premier pivot d'extrémité 2 est bien centré et attiré par la force d'attraction du flux de champ magnétique passant par la première pastille 4 en matériau ferromagnétique doux.

La première pierre d'appui supérieure 12 est agencée pour fermer le dessus du chaton 21 et pour servir d'appui pour le premier aimant 6, qui a un diamètre extérieur identique au diamètre extérieur de la première pierre d'appui supérieure 12. La première rondelle 8 a également un diamètre extérieur identique au diamètre extérieur du premier aimant permanent 6. La première pierre d'appui contre-pivot 10 a un diamètre inférieur à celui de la première rondelle 8 en étant fixée dans un creux central inférieur de la première rondelle 8 du côté du premier pivot d'extrémité 2. Cette première pierre d'appui contre-pivot 10 présente une surface d'appui pour le premier pivot d'extrémité 2.

Il est à noter encore qu'en cas de choc axial, le premier pivot d'extrémité 2 peut repousser la première pierre d'appui contre-pivot 10 et le premier chaton 21 la comprenant vers le haut. Les moyens élastiques 24 permettent de ramener le premier chaton 21 dans sa position initiale. En cas de déplacement radial suite à un choc du premier pivot d'extrémité 2, l'ouverture 23 du premier support permet de limiter son déplacement.

Uniquement un premier palier magnétique 20 a été décrit en référence à la figure 3. Cependant, un second palier magnétique 30 peut être prévu du côté d'un second pivot d'extrémité 3 opposé au premier pivot d'extrémité 2. Ce second palier magnétique comprend les mêmes éléments non représentés que le premier palier magnétique.

Le second palier magnétique comprend un second support avec une ouverture pour le second pivot d'extrémité, un second chaton maintenu par des moyens élastiques dans le second support. Le second chaton comprend également depuis le bas successivement, une seconde pierre d'appui inférieure, un second aimant permanent, une seconde pièce centrale ou pastille de centrage du flux de champ magnétique généré par le second aimant, ladite seconde pastille étant chassée dans une seconde rondelle ou douille amagnétique, et une seconde pierre d'appui contre-pivot pour le second pivot d'extrémité.

Avec l'agencement du premier palier magnétique et du second palier magnétique, les premier et second pivots d'extrémité de l'arbre sont maintenus en équilibre centralement par la force d'attraction magnétique maximale du flux magnétique des aimants passant par les pastilles ferromagnétiques.

Il est encore à noter que chaque surface d'appui des première et seconde pierres d'appui contre-pivot 10, 11 peut présenter une creusure en forme de calotte sphérique pour empêcher un trop grand déplacement radial des premier et second pivots d'extrémité de l'arbre.

A partir de la description qui vient d'être faite, plusieurs variantes de réalisation du dispositif de centrage magnétique d'un arbre selon un axe déterminé dans un mouvement horloger peuvent être conçues par l'homme du métier sans sortir du cadre de l'invention définie par les revendications.

## Revendications

1. Dispositif de centrage magnétique d'un arbre (1) selon un axe déterminé dans un mouvement horloger, le dispositif comprenant au moins un premier palier magnétique (20) comportant un premier aimant (6), qui est destiné à exercer une force d'attraction sur un premier pivot d'extrémité (2) en matériau ferromagnétique de l'arbre (1),
**caractérisé en ce que** le premier palier magnétique (20) comprend au moins une première pièce centrale (4) en matériau ferromagnétique montée entre le premier aimant (6) et le premier pivot d'extrémité (2) de l'arbre (1), cette première pièce centrale (4) étant placée centralement dans une première rondelle ou douille (8) en matériau amagnétique de telle manière à centrer le flux de champ magnétique généré par le premier aimant (6) à travers la première pièce centrale (4) pour attirer magnétiquement le premier pivot d'extrémité (2) de l'arbre (1) selon l'axe déterminé.

2. Dispositif de centrage magnétique selon la revendication 1, **caractérisé en ce que** le diamètre de la première pièce centrale (4) est identique ou supérieur de 0 à 20 % par rapport au diamètre du premier pivot d'extrémité (2).

3. Dispositif de centrage magnétique selon la revendication 1, **caractérisé en ce que** le diamètre de la première pièce centrale (4) est identique ou inférieur de 0 à 20 % par rapport au diamètre du premier pivot d'extrémité (2).

4. Dispositif de centrage magnétique selon la revendication 1, **caractérisé en ce que** le premier palier magnétique (20) comprend encore une première pierre d'appui contre-pivot (10), qui est montée entre la première pièce centrale (4) et le premier pivot d'extrémité (2) de l'arbre (1).

5. Dispositif de centrage magnétique selon la revendication 4, **caractérisé en ce que** la première pierre d'appui contre-pivot (10) est en rubis.

6. Dispositif de centrage magnétique selon la revendication 1, **caractérisé en ce que** la première pièce centrale (4) est réalisée en matériau ferromagnétique doux.

7. Dispositif de centrage magnétique selon la revendication 1, **caractérisé en ce que** la première rondelle ou douille (8) est réalisée en laiton.

8. Dispositif de centrage magnétique selon la revendication 4, **caractérisé en ce que** la première pièce centrale (4) est collée dans une ouverture centrale de la première rondelle ou douille (8), et **en ce que** la première rondelle ou douille (8) avec la première pièce centrale (4) sont en contact direct avec le premier aimant (6) et la première pierre d'appui contre-pivot (10).

9. Dispositif de centrage magnétique selon la revendication 4, **caractérisé en ce que** la première pièce centrale (4) est chassée dans une ouverture centrale de la première rondelle ou douille (8), et **en ce que** la première rondelle ou douille (8) avec la première pièce centrale (4) sont en contact direct avec le premier aimant (6) et la première pierre d'appui contre-pivot (10).

10. Dispositif de centrage magnétique selon l'une des revendications 8 et 9, **caractérisé en ce que** le diamètre extérieur du premier aimant (6) est identique au diamètre extérieur de la rondelle ou douille (8) et au diamètre extérieur de la première pierre d'appui contre-pivot (10).

11. Dispositif de centrage magnétique selon l'une des revendications 8 et 9, **caractérisé en ce que** le diamètre extérieur du premier aimant (6) est identique au diamètre extérieur de la rondelle ou douille (8), et **en ce que** la première pierre d'appui contre-pivot (10) a un diamètre inférieur au diamètre de la première rondelle ou douille (8) en étant fixée dans un creux central inférieur de la première rondelle ou douille (8) du côté du premier pivot d'extrémité (2).

12. Dispositif de centrage magnétique selon l'une des revendications 10 et 11, **caractérisé en ce que** le premier palier magnétique (20) comprend un premier support (22), qui comporte une base du côté du premier pivot d'extrémité (2) avec une ouverture (23) de diamètre supérieure au diamètre du premier pivot d'extrémité (2) pour le passage sans contact du premier pivot d'extrémité (2), un premier chaton (21) positionné dans le premier support (22) et maintenu dans un logement en forme de cône inversé du premier support (22) par des moyens élastiques (24), et **en ce que** le chaton comprend successivement, une première pierre d'appui supérieure (12), le premier aimant permanent (6), la première pièce centrale (4) disposée dans la première rondelle ou douille (8), et la première pierre d'appui contre-pivot (10).

13. Dispositif de centrage magnétique selon la revendication 1, **caractérisé en ce qu'**il comprend un second palier magnétique (30) comportant un second aimant (7), qui est destiné à exercer une force d'attraction sur un second pivot d'extrémité (3) en matériau ferromagnétique de l'arbre (1), le second pivot d'extrémité (3) étant opposé au premier pivot d'extrémité (2) de l'arbre (1).

14. Dispositif de centrage magnétique selon la revendication 13, **caractérisé en ce que** le second palier magnétique (30) comprend une seconde pièce centrale (5) en matériau ferromagnétique doux montée entre le second aimant (7) et le second pivot d'extrémité (3) de l'arbre (1), cette seconde pièce centrale (5) étant placée centralement dans une seconde rondelle ou douille (9) en matériau amagnétique pour centrer le flux de champ magnétique généré par le second aimant (7) à travers la seconde pièce centrale (5) pour attirer magnétiquement le second pivot d'extrémité (3) de l'arbre (1) selon l'axe déterminé, **en ce que** le diamètre de la seconde pièce centrale (5) est identique ou supérieur de 0 à 20 % par rapport au diamètre du second pivot d'extrémité (2), et **en ce que** le second palier magnétique (30) comprend encore une seconde pierre d'appui contre-pivot (11), qui est montée entre la seconde pièce centrale (5) et le second pivot d'extrémité (3) de l'arbre (1).

15. Dispositif de centrage magnétique selon la revendication 13, **caractérisé en ce que** le second palier magnétique (30) comprend une seconde pièce centrale (5) en matériau ferromagnétique doux montée entre le second aimant (7) et le second pivot d'extrémité (3) de l'arbre (1), cette seconde pièce centrale (5) étant placée centralement dans une seconde rondelle ou douille (9) en matériau amagnétique pour centrer le flux de champ magnétique généré par le second aimant (7) à travers la seconde pièce centrale (5) pour attirer magnétiquement le second pivot d'extrémité (3) de l'arbre (1) selon l'axe déterminé, **en ce que** le diamètre de la seconde pièce centrale (5) est identique ou inférieur de 0 à 20 % par rapport au diamètre du second pivot d'extrémité (2), et **en ce que** le second palier magnétique (30) comprend encore une seconde pierre d'appui contre-pivot (11), qui est montée entre la seconde pièce centrale (5) et le second pivot d'extrémité (3) de l'arbre (1).

16. Dispositif de centrage magnétique selon l'une des revendications 14 et 15, **caractérisé en ce que** la seconde pierre d'appui contre-pivot (11) est en rubis.

17. Dispositif de centrage magnétique selon l'une des revendications 14 et 15, **caractérisé en ce que** la seconde rondelle ou douille (9) est réalisée en laiton.
